# EUROPEAN PATENT APPLICATION

(11) **EP 1 635 442 A1**
(43) Date of publication of application: **15.03.2006**
(21) Application number: 04745670.2
(22) Date of filing: 08.06.2004
(51) Int. Cl.: H02K 33/02

(54) **LINEAR MOTOR AND PROCESS FOR MANUFACTURING THE SAME, LINEAR COMPRESSOR AND STIRLING ENGINE**

(30) Priority: 16.06.2003 JP 2003170885
(71) Applicant: SHARP KABUSHIKI KAISHA, Osaka-shi, Osaka 545-8522 (JP)
(72) Inventor: UEDA, Kazuhiko, Kitakatsuragi-gun, Nara 6390202 (JP)
(74) Representative: Brown, Kenneth Richard
(86) International application number: PCT/JP2004/007960
(87) International publication number: WO 2004/112223

(57) **Abstract**

A linear motor device (1) includes an inner yoke, an outer yoke (4), a coil-wound body (8) and a movable magnet portion, first and second clamp rings (2, 3) for clamping the outer yoke (4), and a spacer (5) for coupling the first and second clamp rings (2, 3) at a given spacing. The movable magnet portion drives a piston reciprocating in a cylinder. The first clamping member (2) is provided with a support portion (16) for supporting a spring for pushing the piston. The second clamping member (3) is fixed directly or indirectly to the cylinder. A linear compressor and a Stirling engine include the above-described linear motor device (1).

## Description

### Technical Field

The present invention relates to a linear motor device and a method of manufacturing the same, a linear compressor and a Stirling engine both having the linear motor device.

### Background Art

Conventionally, a linear motor device has been used in a Stirling engine to serve as a driving portion for driving a piston. An example of the linear motor device is disclosed in Japanese Patent Laying-Open No. 2002-139263.

The document above describes a linear motor device including a bobbin/coil having an inner yoke provided at an outer periphery of a cylinder, an outer yoke assembly provided on the side of a casing to surround the inner yoke, and a permanent magnet located in a gap between the inner yoke and an outer yoke and coupled to a piston, with the outer yoke assembly located to face the inner yoke, the outer yoke provided to cover the bobbin/coil from the casing side and an axial side, and a pair of pressing members of a ring-like shape provided to sandwich the outer yoke in an axial direction.

Patent Document 1: Japanese Patent Laying-Open No. 2002-139263

### Disclosure of the Invention

### Problems to be Solved by the Invention

However, the linear motor device described in the document above does not include a member for setting a spacing between the pair of pressing members. Therefore, if the pressing members are inclined, for example, the spacing therebetween (an axial dimension of the linear motor device) may vary in a circumferential direction of the pressing members. Such variations in spacing between the pressing members make it difficult to incorporate the linear motor device into an apparatus. In addition, it is necessary to ensure a margin in incorporating the linear motor device into an apparatus, which disadvantageously makes the apparatus large.

Moreover, a Stirling engine and a linear compressor incorporating the above-described linear motor device may encounter the problems below.

In the case of a Stirling engine having a piston and a displacer, for example, the piston is directly driven by the linear motor device, and thus less affected by a locational error than the displacer. However, since an operation of the displacer is usually controlled only by a spring, mounting accuracy of the spring for pushing the displacer is critical. If the mounting accuracy of the spring decreases, both of a compression space and an expansion space are affected thereby, which results in considerable variations in performance of the Stirling engine.

In the case of a linear compressor, a spring for supporting a piston may be mounted to the above-described pressing members of the linear motor device. In this case, variations in axial dimension of the linear motor device can cause variations in volume of the compression space. Therefore, the linear compressor may also suffer from considerable variations in performance.

The present invention is made to solve the problems above. An object of the present invention is to provide a linear motor device whose variations in axial dimension can be reduced and a method of manufacturing the same, and a linear compressor and a Stirling engine whose variations in performance can be reduced.

### Means for Solving the Problems

A linear motor device according to the present invention includes an inner yoke, an outer yoke, a coil-wound body and a movable magnet portion, first and second clamping members for clamping the outer yoke, and a spacer for coupling the first and second clamping members at a given spacing. The movable magnet portion drives a piston reciprocating in a cylinder. The first clamping member is provided with a support portion supporting a spring for pushing the piston. The second clamping member is fixed directly or indirectly to the cylinder.

By providing the spacer between the first and second clamping members as such, it is possible to set the spacing between the first and second clamping members, which can reduce variations in spacing between the first and second clamping members in the circumferential direction thereof.

The spacer preferably has axial end faces and smaller-diameter portions protruding from the axial end faces at both ends. The first and second clamping members preferably have first and second receiving portions having concave portions for receiving the smaller-diameter portions of the spacer and support surfaces for supporting the axial end faces of the spacer. It is preferable to locate the spacer adjacently to an outer yoke block located in a circumferential direction of the first and second clamping members.

The outer yoke is made of a plurality of the outer yoke blocks arranged in a circumferential direction of the first and second clamping members, and the outer yoke blocks are separated in a longitudinal direction of the spacer. The outer yoke blocks are bonded to the first and second clamping members with welded portions interposed therebetween. In the present specification, the "welded portion "refers to a bonded portion formed by melting at least one of the targets to be bonded. When a resin material and a metal material are welded, for example, the welded portion thereof is mainly formed of the resin.

A method of manufacturing a linear motor device according to the present invention includes the steps of fixing a first outer yoke block and a second outer yoke block both forming an outer yoke block to a first clamping member and a second clamping member, respectively, by ultrasonic welding, while the first and second outer yoke blocks are fixed to the first and second clamping members, coupling the first and second clamping members together by ultrasonic welding with a spacer interposed therebetween, and fixing the first and second outer yoke blocks to each other. Preferably, the first and second clamping members are coupled together with a gap provided between the first and second outer yoke blocks.

By coupling the first and second clamping members with the spacer interposed therebetween as described above, it is possible to reduce variations in spacing between the first and second clamping members in a circumferential direction of the first and second clamping members. In addition, by adopting ultrasonic welding, it is possible to weld a plurality of sites simultaneously, which allows the outer yoke block to be fixed efficiently to the clamping members and the first and second clamping members to be coupled efficiently to each other.

A linear compressor according to the present invention includes the linear motor device described above. The linear compressor according to the present invention may include a cylinder provided in a casing, a piston, a linear motor device provided in an outer periphery of the cylinder to drive the piston, and a spring for pushing the piston. In this case, the linear motor device has an inner yoke, an outer yoke, a coil-wound body and a movable magnet portion, first and second clamping members for clamping the outer yoke, a spacer for coupling the first and second clamping members at a given spacing, and a support portion for supporting the spring. The first clamping member is provided with the support portion and the second clamping member is mounted to the cylinder. The second clamping member may be fixed directly to the cylinder, but not limited thereto. The second clamping member may also be fixed indirectly to the cylinder with another member interposed therebetween.

A Stirling engine according to the present invention includes a cylinder provided in a casing, a piston and a displacer, a linear motor device allowing the piston to reciprocate in the cylinder, and a spring for pushing the displacer. The linear motor device has an inner yoke, an outer yoke, a coil-wound body and a movable magnet portion, first and second clamping members for clamping the outer yoke, a spacer for coupling the first and second clamping members at a given spacing, and a support portion for supporting the spring. The first clamping member is provided with the support portion and the second clamping member is mounted to the cylinder. The second clamping member may be fixed directly to the cylinder, but not limited thereto. The second clamping member may also be fixed indirectly to the cylinder with another member interposed therebetween.

By providing the spacer between the first and second clamping members of the linear motor device incorporated in the linear compressor or the Stirling engine as described above, it is possible to reduce variations in spacing between the first and second clamping members of the linear motor device and variations in spacing between the first and second clamping members in a circumferential direction of the first and second clamping members. Accordingly, it is possible to improve mounting accuracy of the spring for pushing the piston and the displacer with respect to the cylinder (or reduce variations), which can eventually reduce variations in volume of the compression space in the linear compressor and variations in volume of the compression space and the expansion space in the Stirling engine.

### Effects of the Invention

In the linear motor device and the method of manufacturing the same according to the present invention, it is possible to reduce variations in spacing between the first and second clamping members, which can reduce variations in axial dimension of the linear motor device.

In the linear compressor according to the present invention, variations in volume of the compression space can be reduced. In the Stirling engine according to the present invention, variations in volume of the compression space and the expansion space can be reduced. Accordingly, variations in performance can be reduced in both cases.

### Brief Description of the Drawings

Fig. 1 is a perspective view of a linear motor device according to an embodiment of the present invention.
Fig. 2 is a cross section of a critical part of the linear motor device shown in Fig. 1.
Fig. 3 is a partial cross section of a first clamp ring of the linear motor device shown in Fig. 1.
Fig. 4 is a cross section of an outer yoke of the linear motor device shown in Fig. 1.
Fig. 5 is an exploded perspective view of the linear motor device shown in Fig. 1.
Fig. 6 is a perspective view of an outer yoke block of the linear motor device shown in Fig. 1.
Fig. 7 is a cross section showing a coupled portion of a second clamp ring and the outer yoke block of the linear motor device shown in Fig. 1 and the periphery thereof.
Fig. 8 is a cross section showing coupled portions of the first and second clamp rings and a spacer of the linear motor device shown in Fig. 1 and the periphery thereof.
Fig. 9 is a cross section of a Stirling freezer in an embodiment of the present invention.
Fig. 10 is a cross section of a linear compressor in an embodiment of the present invention.

### Description of the Reference Signs

1: linear motor device, 2: first clamp ring, 3: second clamp ring, 4: outer yoke, 4a, 4b: outer yoke block, 5: spacer, 6a, 6b: receiving portion, 7, 13: weld, 8: coil-wound body, 8a: bobbin, 8b: coil, 9: support member, 9a, 9b: smaller-diameter portion, 10a-10e: concave portion, 11, 14, 15a, 15b: welded portion, 12a, 12b: convex portion, 16: support portion, 20: Stirling freezer, 21, 41: casing, 22, 42: cylinder, 23, 43: piston, 24: displacer, 25: regenerator, 26, 44: compression space, 27: expansion space, 28: radiating portion, 29: endothermic portion, 30: inner yoke, 31: permanent magnet, 32: movable magnet portion, 33, 46: piston spring, 34: displacer spring, 35: displacer rod, 36: backpressure space, 40: linear compressor, 45: head cover, 47: plate, 48: coil spring, 49:
support plate.

### Best Modes for Carrying Out the Invention

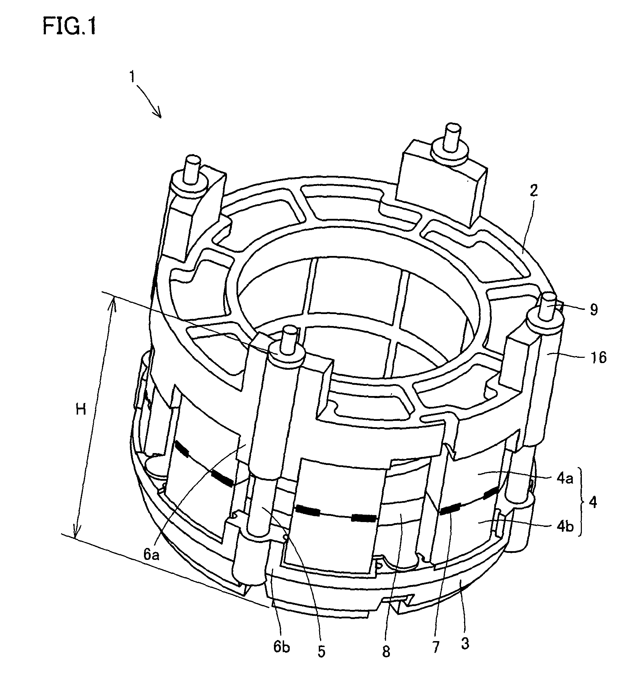

The embodiments of the present invention will now be described in reference to Figs. 1-10.

A linear motor device according to an embodiment of the present invention includes an inner yoke, an outer yoke located outside the inner yoke, a coil-wound body and a movable magnet portion located between the inner yoke and the outer yoke, first and second clamp rings (first and second clamping members) for clamping the outer yoke, and a spacer (a support member: a coupling member) for coupling the first and second clamp rings at a given spacing.

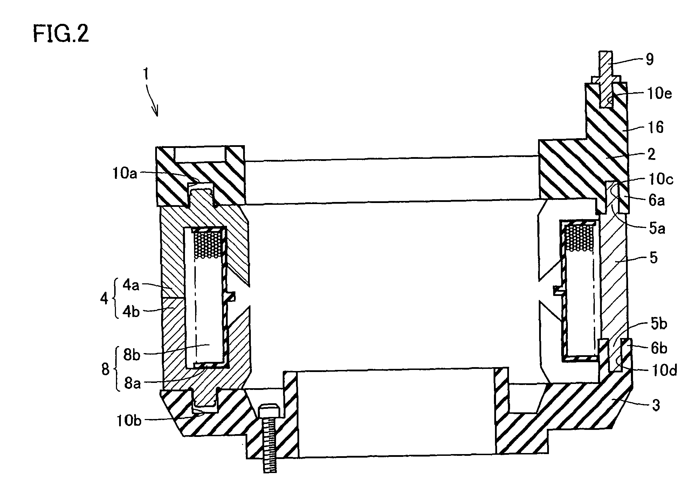

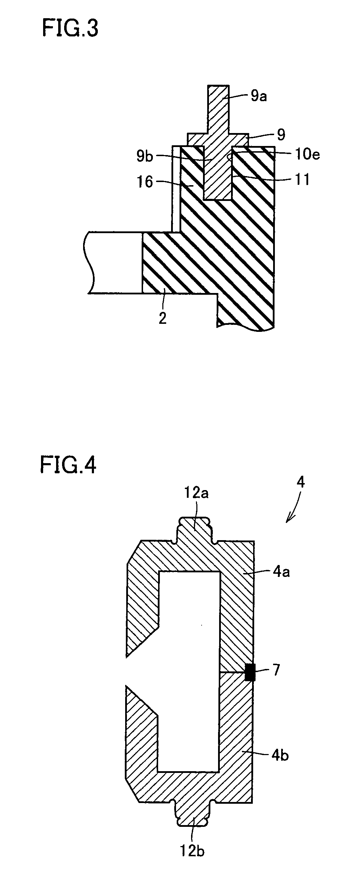

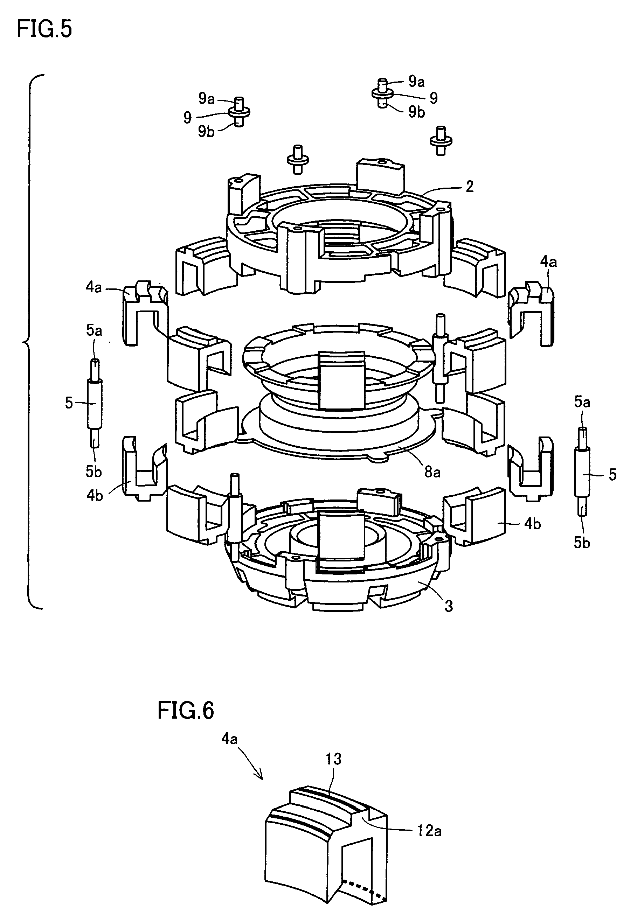

Fig. 1 is a partial perspective view of an example of the linear motor device 1 above. Fig. 2 is a cross section of linear motor device 1, and Fig. 5 is an exploded perspective view thereof. The inner yoke and the movable magnet portion are not shown. Figs. 3, 4, 6, 7, and 8 are enlarged views of the critical parts of linear motor device 1 in Fig. 1.

As shown in Fig. 1, linear motor device 1 has first and second clamp rings 2 and 3 of an annular shape. For the material of first and second clamp rings 2 and 3, it is possible to use a resin such as polycarbonate or polybutylene terephthalate, or the resin mixed with glass fiber. For use in a Stirling engine, a less hygroscopic material excellent in heat resistance is preferably used for first and second clamp rings 2 and 3.

First and second clamp rings 2 and 3 clamp an outer yoke 4. First clamp ring 2 has a support portion 16 for supporting a spring to be connected to a piston or a displacer of a Stirling engine, for example, as shown in Figs. 1-3. In an example of Figs. 1-3, support portion 16 is formed of a convex portion provided at a top face of first clamp ring 2 in an integrated manner. Alternatively, another member may be assembled to first clamp ring 2 to provide support portion 16.

A concave portion 10e is formed at a top face of support portion 16 as shown in Figs. 2 and 3, and a support member 9 is mounted to convex portion 10e. Support member 9, which is made of metal such as stainless steel, has smaller-diameter portions (protruding portions) 9a and 9b each having a smaller diameter than other portions at both ends in a longitudinal direction, and axial end faces of an annular shape around smaller-diameter portions 9a and 9b. Smaller-diameter portion 9b is fitted into concave portion 10e, and support member 9 is fixed to support portion 16 by ultrasonically welding a welded portion 11, for example, as shown in Fig. 3. Note that it is possible to improve fixing strength of support member 9 by knurling smaller-diameter portions 9a and 9b.

A spacer 5 is provided between first and second clamp rings 2 and 3. A plurality of spacers 5 are typically provided at regular spacings in a circumferential direction of first and second clamp rings 2 and 3. Spacer 5 may be formed of a rodlike member or a cylindrical member made of a heat-resistant material. A round bar member made of metal such as stainless steel may be adopted for spacer 5.

In the example in Fig. 5, spacer 5 has axial end faces and smaller-diameter portions (protruding portions) 5a and 5b protruding from the axial end faces at both ends in a longitudinal direction, just as in the case of support member 9. Smaller-diameter portions 5a and 5b can easily be formed by, for example, machining spacer 5. It is important to make the axial end faces of spacer 5 flat, and suppress variations in spacing between the axial end faces (axial length).

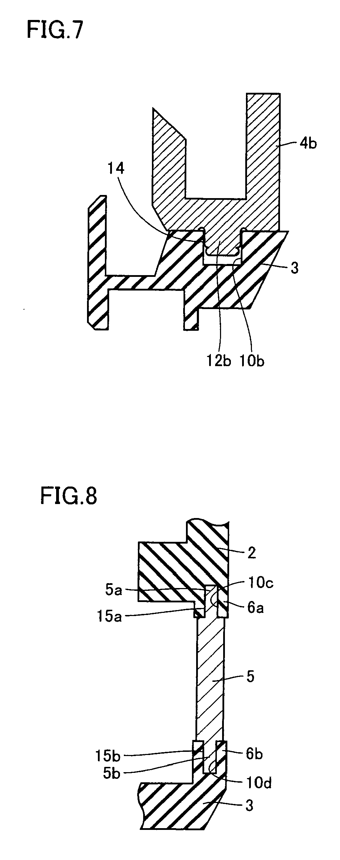

First and second clamp rings 2 and 3 have convex receiving portions 6a and 6b for receiving smaller-diameter portions 5a and 5b located at both ends of spacer 5, as shown in Figs. 1, 2 and 8. Receiving portions 6a and 6b have concave portions 10c and 10d for receiving smaller-diameter portions 5a and 5b of spacer 5, and support surfaces around concave portions 10c and 10d for supporting the axial end faces of spacer 5, as shown in Figs. 2 and 8. It is also important to make the support surfaces flat.

As described above, the axial end faces of spacer 5 are made flat to suppress variations in spacing between the end faces, and the support surfaces in receiving portions 6a and 6b of first and second clamp rings 2 and 3 are also made flat, and first and second clamp rings 2 and 3 are coupled with spacer 5 interposed therebetween. Accordingly, it is possible to set a spacing between first and second clamp rings 2 and 3 to a given value.

In particular, by providing a plurality of spacers 5 at regular spacings in a circumferential direction of first and second clamp rings 2 and 3, it is possible to couple first and second clamp rings 2 and 3 in parallel at a given spacing. The inventors of the present invention actually fabricated the structure in Fig. 1 and recognized that it is possible to suppress variations in a height H, and variations in height H in a circumferential direction, of linear motor device 1 shown in Fig. 1 to not more than 0.1 mm.

Since a spacing between first and second clamp rings 2 and 3 can thus be set to a given value, linear motor device 1 can easily be incorporated in an apparatus such as a Stirling engine. Furthermore, increase in size of the apparatus can be avoided.

As shown in Fig. 8, spacer 5 is fixed to first and second clamp rings 2 and 3 by, for example, ultrasonically welding welded portions 15a and 15b. By bonding the spacer and the clamp rings with the welded portions interposed therebetween, it is possible to suppress secular degradation of the bonded portions and improve heat resistance when compared to the case of bonding the same with an adhesive.

For the material of first and second clamp rings 2 and 3 that can be ultrasonically welded, it is possible to use not only a resin such as polycarbonate or polybutylene terephthalate, and the resin mixed with glass fiber, but also noryl, polyamide (PA), polymethyl methacrylate (PMMA), acrylonitrile butadiene styrene (ABS) or the like. When a material having a high melting point such as a metal material is used for spacer 5, smaller-diameter portions 5a and 5b may be knurled so that depressions at the surfaces of smaller-diameter portions 5a and 5b can be filled with a melted material of first and second clamp rings 2 and 3, which can improve fixing strength of spacer 5.

Outer yoke 4 is formed of a pair of outer yoke blocks separated in a longitudinal direction of spacer 5 (an axial direction of linear motor device 1). In the example of Figs. 1 and 2, outer yoke blocks 4a and 4b held by clamp rings 2 and 3, respectively, form outer yoke 4.

Outer yoke blocks 4a and 4b are fabricated by, for example, laminating a plurality of electrical steel sheets. As shown in Fig. 6, outer yoke block 4a has, for example, three welds 13 (in Fig. 6, portions shown by bold solid lines and a dashed line correspond to the welds). Outer yoke block 4b also has three welds 13. Welds 13 may be welded by ultrasonic welding, and may be welded by other techniques.

As shown in Figs. 4 and 5, both of outer yoke blocks 4a and 4b have an approximately U-shape and have convex portions 12a and 12b, respectively. First and second clamp rings 2 and 3 have concave portions 10a and 10b for receiving convex portions 12a and 12b of outer yoke blocks 4a and 4b, respectively, as shown in Fig. 2. Convex portions 12a and 12b of outer yoke blocks 4a and 4b are fitted into concave portions 10a and 10b so that outer yoke blocks 4a and 4b are held by first and second clamp rings 2 and 3, respectively, with open ends of outer yoke blocks 4a and 4b opposed to each other.

As shown in Fig. 7, outer yoke block 4b is bonded to second clamp ring 3 with a welded portion 14 interposed therebetween, and outer yoke block 4a is also bonded to first clamp ring 2 with a welded portion interposed therebetween. The welded portions can also be made by, for example, ultrasonic welding. It is possible to improve bonding strength between the outer yoke blocks and the clamp rings by providing depressions at the surfaces of convex portions 12a and 12b.

Outer yoke blocks 4a and 4b are connected to each other with gaps partially left therebetween. Each of the gaps between outer yoke blocks 4a and 4b is set to approximately not more than 0.2 mm (preferably, approximately 0.1 mm), which can prevent degradation in magnetic property of linear motor device 1.

Outer yoke blocks 4a and 4b are connected together with a weld 7 interposed therebetween, as shown in Figs. 1 and 4. In the example in Fig. 1, welds 7 are formed adjacently to both ends of outer yoke blocks 4a and 4b. Welds 7 can be formed by, for example, laser welding. Note that any techniques other than laser welding may be adopted as long as outer yoke blocks 4a and 4b can be coupled (fixed) together.

When an alternating current is applied to linear motor device 1, for example, a magnetic flux flows through a yoke and can cause outer yoke blocks 4a and 4b to vibrate and generate noise or the like, which results in degradation in property of linear motor device 1. However, such degradation can be avoided by coupling outer yoke blocks 4a and 4b as described above.

Outer yokes 4, each of which is formed of outer yoke blocks 4a and 4b, are spaced apart in a circumferential direction of first and second clamp rings 2 and 3, as shown in Fig. 1. Spacer 5 is located adjacently to given outer yoke 4.

Referring to Figs. 1 and 2 again, linear motor device 1 has a coil-wound body 8, which has a bobbin 8a and a coil 8b wound around bobbin 8a as shown in Fig. 2. In the example in Fig. 2, coil-wound body 8 is clamped by outer yoke blocks 4a and 4b to be held in outer yoke 4.

Linear motor device 1 according to the present embodiment includes an inner yoke inside outer yoke 4 and a movable magnet portion located between the inner yoke and outer yoke 4 not shown. The inner yoke is located on an outer periphery of a cylinder having a piston therein, for example, and the movable magnet portion has a cylindrical shape, for example, and has a permanent magnet at its tip. The permanent magnet is located between the inner yoke and outer yoke 4.

A method of manufacturing linear motor device 1 having the structure above will now be described.

Initially, outer yoke blocks 4a and 4b, and first and second clamp rings 2 and 3 are fabricated. Outer yoke blocks 4a and 4b can be fabricated by processing a laminated material made of electrical steel sheets. First and second clamp rings 2 and 3 can be formed of resin by, for example, injection molding. It is also possible to fabricate outer yoke blocks 4a and 4b by baking, in a mold, fine iron powder whose particles are covered with insulating films made of resin and the like. The surfaces of convex portions 12a and 12b of outer yoke blocks 4a and 4b are roughened, for example, to provide depressions.

In addition, spacer 5 and support member 9 described above are also fabricated. When spacer 5 and support member 9 are made of stainless steel, both ends of round bars made of stainless steel are machined so that spacer 5 having smaller-diameter portions 5a and 5b, and support member 9 having smaller-diameter portions 9a and 9b can be fabricated. Smaller-diameter portions 5a, 5b and 9b are knurled. Coil-wound body 8 in which coil 8b is wound around bobbin 8a is fabricated as well.

Afterwards, convex portion 12a of outer yoke block 4a is fitted into concave portion 10a of first clamp ring 2, and convex portion 12b of outer yoke block 4b is fitted into concave portion 10b of second clamp ring 3. Thereafter, outer yoke blocks 4a and 4b are coupled to first and second clamp rings 2 and 3, respectively, by ultrasonic welding. Outer yoke blocks 4a and 4b can more firmly be fixed to first and second clamp rings 2 and 3 by providing depressions at the surfaces of convex portions 12a and 12b as described above.

Coil-wound body 8 is then clamped between outer yoke blocks 4a and 4b. After smaller-diameter portions 5a and 5b of spacer 5 are inserted into concave portions 10c and 10d of first and second clamp rings 2 and 3, respectively, and smaller-diameter portion 9b of support member 9 is inserted into concave portion 10e of first clamp ring 2, an ultrasonic wave is applied thereto. As a result, support member 9 is ultrasonically welded to first clamp ring 2 and spacer 5 is ultrasonically welded to first and second clamp rings 2 and 3 so that first and second clamp rings 2 and 3 can be coupled.

In coupling first and second clamp rings 2 and 3, a gap of approximately 0.2 mm is assured between outer yoke blocks 4a and 4b. The gap allows spacer 5 to set the spacing between first and second clamp rings 2 and 3 with high accuracy, irrespective of variations in shape or mounting accuracy of outer yoke blocks 4a and 4b.

Outer yoke blocks 4a and 4b are then connected. Outer yoke blocks 4a and 4b can be fixed to each other by welding the same with laser and the like. Accordingly, it is possible to suppress a failure such as a noise generated by the vibration of outer yoke blocks 4a and 4b caused when a current is applied to linear motor device 1, and suppress degradation in property of linear motor device 1.

Thereafter, when the inner yoke and the movable magnet portion are located inside the structure clamped by first and second clamp rings 2 and 3, linear motor device 1 according to the present embodiments can be completed. If linear motor device 1 is to be incorporated in an apparatus such as a Stirling engine, the structure above may be incorporated in the apparatus such that the inner yoke and the movable magnet portion are received in the structure.

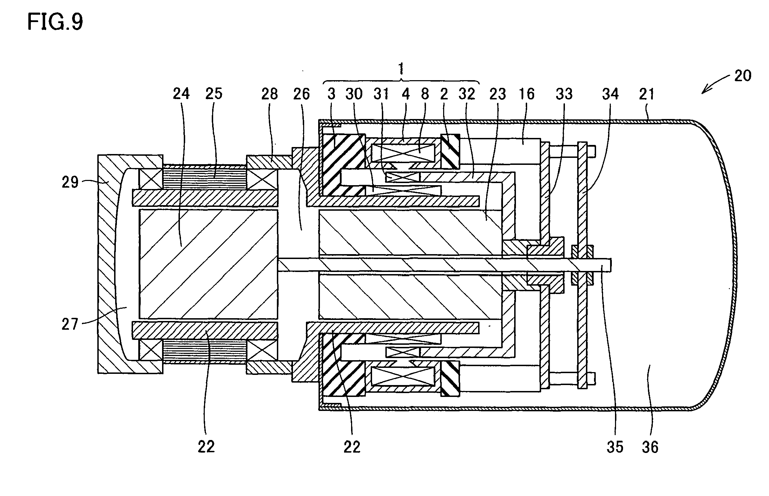

A Stirling engine according to an embodiment of the present invention will now be described in reference to Fig. 9. In the description below, the present invention is applied to a Stirling freezer, which is an example of the Stirling engine. However, the present invention may also be applied to other types of Stirling engine other than the Stirling freezer.

Fig. 9 shows a schematic structure of a Stirling freezer 20 according to the present embodiment. As shown in Fig. 9, Stirling freezer 20 includes a casing 21, a cylinder 22 provided in casing 21, a piston 23 and a displacer 24 reciprocating in cylinder 22, a regenerator 25, a compression space (a first working space) 26, an expansion space (a second working space) 27, a radiating portion (a warm head) 28, an endothermic portion (a cold head) 29, the above-described linear motor device 1 serving as a portion for driving the piston, a piston spring (a first spring) 33 such as a plate spring, for supporting piston 23 and applying a given elastic force thereto, a displacer spring (a second spring) 34 such as a plate spring, for supporting displacer 24 and applying a given elastic force thereto, a displacer rod 35, and a backpressure space 36.

Linear motor device 1, which is provided in an outer periphery of cylinder 22, includes an inner yoke 30, outer yoke 4 located outside inner yoke 30, coil-wound body 8 and a movable magnet portion 32 located between inner yoke 30 and outer yoke 4, first and second clamp rings 2 and 3 for clamping outer yoke 4, the spacer for coupling first and second clamp rings 2 and 3 at a given spacing (not shown in Fig. 9), and support portion 16 for supporting piston spring 33 and displacer spring 34.

Inner yoke 30 is provided to surround the outer periphery of cylinder 22, and movable magnet portion 32 having a cylindrical shape is located to surround inner yoke 30. Movable magnet portion 32 is connected to piston 23 and has a permanent magnet 31 at its tip. Permanent magnet 31 is located between inner yoke 30 and outer yoke 4.

First clamp ring 2 has support portion 16 for supporting piston spring 33 and displacer spring 34. Piston spring 33 is connected to support portion 16 with a support member mounted to support portion 16 interposed therebetween. Displacer spring 34 is connected to piston spring 33 and support portion 16 with a coupling member mounted to the support member interposed therebetween. The other structures of linear motor device 1 are similar to those of the case described above. A linear motor device having no piston spring 33 may be contemplated. In this case, displacer spring 34 is directly connected to support portion 16.

As described above, linear motor device 1 can allow a spacing between first and second clamp rings 2 and 3 to be set with high accuracy. Therefore, when linear motor device 1 is incorporated into Stirling engine such that second clamp ring 3 of linear motor device 1 is directly fixed to a flange surface of cylinder 22 with a screw shown in Fig. 2 (in the structure of Fig. 9, indirectly fixed to the flange surface with a portion of casing 21 interposed therebetween), it is possible to set the height at which first clamp ring 2 is located with respect to the mounting surface of linear motor device 1 (the flange surface of cylinder 22) with high accuracy. Accordingly, it is possible to reduce variations in volume of compression space 26 and expansion space 27 of Stirling freezer 20, and reduce variations in performance of Stirling freezer 20.

Casing 21 is a portion forming an outer shell (an external wall) of Stirling freezer 20, and various parts including cylinder 22 and others are assembled in casing 21. In the example in Fig. 9, casing 21 is not formed of a single container, but is mainly formed of a vessel portion for defining backpressure space 36 and receiving linear motor device 1, and external wall portions of radiating portion 28, regenerator 25, and endothermic portion 29. Casing 21 is filled with a working medium such as a helium gas, a hydrogen gas, or a nitrogen gas.

Cylinder 22 has an approximately cylindrical shape. In cylinder 22, piston 23 and displacer 24 are coaxially spaced apart. Piston 23 and displacer 24 divide the working space in cylinder 22 into compression space 26 and expansion space 27. Compression space 26 is mainly surrounded by radiating portion 28, and expansion space 27 is mainly surrounded by endothermic portion 29.

Between compression space 26 and expansion space 27 are provided regenerator 25, through which both of the spaces communicate with each other, and a closed loop is formed in Stirling freezer 20. The working medium contained in the closed loop flows in accordance with the movement of piston 23 and displacer 24, which implements an inverted Stirling cycle.

One end of piston 23 is connected to piston spring 33. Piston spring 33 and linear motor device 1 can allow piston 23 to reciprocate periodically in cylinder 22 with a given amplitude.

An operation of Stirling freezer 20 according to the present embodiments will now be described.

Initially, linear motor device 1 is actuated to drive piston 23. Piston 23, which is driven by linear motor device 1, moves towards displacer 24 to compress a working medium (a working gas) in compression space 26.

As piston 23 moves towards displacer 24, the temperature of the working medium in compression space 26 rises. However, heat generated in compression space 26 is liberated to the outside by radiating portion 28. Therefore, the working medium in compression space 26 is maintained isothermally. In other words, this process corresponds to an isothermal compression process in an inverted Stirling cycle.

After piston 23 moves towards displacer 24, displacer 24 moves to endothermic portion 29. The working medium compressed by piston 23 in compression space 26 flows into regenerator 25, and further into expansion space 27. At that time, heat of the working medium is accumulated in regenerator 25. In other words, this process corresponds to a constant volume cooling process in an inverted Stirling cycle.

The working medium that flows into expansion space 27 to obtain high pressure is expanded by the movement of displacer 24 towards piston 23. Therefore, the temperature of the working medium in expansion space 27 drops. However, since external heat is transferred to expansion space 27 by endothermic portion 29, expansion space 27 is maintained approximately isothermally. In other words, this process corresponds to an isothermal expansion process in an inverted Stirling cycle.

Thereafter, displacer 24 starts moving away from piston 23. Accordingly, the working medium in expansion space 27 passes through regenerator 25 and returns to compression space 26 again. At that time, the heat accumulated in regenerator 25 is provided to the working medium, and the temperature of the working medium rises. In other words, this process corresponds to a constant volume heating process in an inverted Stirling cycle.

By repeating the series of processes (the isothermal compression process-the constant volume cooling process-the isothermal expansion process-the constant volume heating process), an inverted Stirling cycle is formed. As a result, the temperature of endothermic portion 29 is gradually lowered to crogenic temperature.

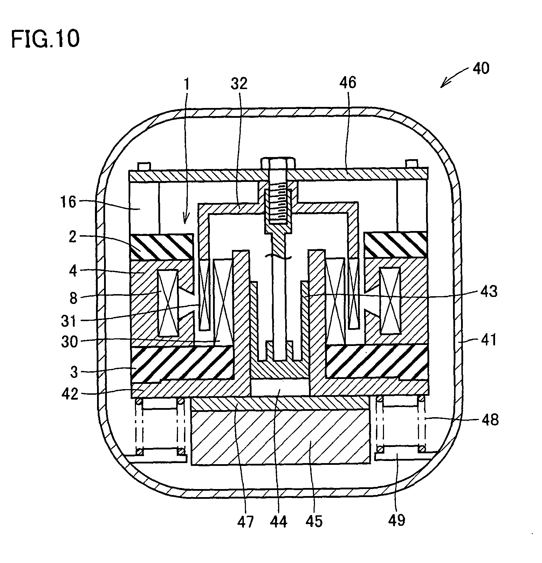

A linear compressor according to an embodiment of the present invention will be described in reference to Fig. 10.

As shown in Fig. 10, a linear compressor 40 includes a cylinder 42 provided in a casing 41, a piston 43 reciprocating in cylinder 42, the above-described linear motor device 1 provided in an outer periphery of cylinder 42 to drive piston 43, a piston spring (a plate spring) 46 for pushing piston 42, and a support mechanism for supporting the cylinder.

Linear motor device 1 has inner yoke 30 provided in an outer periphery of cylinder 42, outer yoke 4 provided outside inner yoke 30, coil-wound body 8 and movable magnet portion 32 located between inner yoke 30 and outer yoke 4, first and second clamp rings 2 and 3 for clamping outer yoke 4, the spacer for coupling first and second clamp rings 2 and 3 at a given spacing, and support portion 16 for supporting piston spring 46.

Inner yoke 30 is provided to surround the outer periphery of cylinder 42. Cylindrical, movable magnet portion 32 is located to surround inner yoke 30. Movable magnet portion 32 is connected to piston 43, and has permanent magnet 31 at its tip. Permanent magnet 31 is located between inner yoke 30 and outer yoke 4.

First clamp ring 2 has support portion 16 for supporting piston spring 46. Piston spring 46 is connected to support portion 16 with a support member mounted to support portion 16 interposed therebetween. The other structures of linear motor device 1 are similar to those of the case described above.

In the case of linear compressor 40 according to the present embodiment, when linear motor device 1 is incorporated into linear compressor 40, it is also possible to set with high accuracy the height at which first clamp ring 2 is located with respect to the mounting surface of linear motor device 1 (a flange surface of cylinder 42). Accordingly, it is possible to reduce variations in volume of a compression space 44, and variations in performance of linear compressor 40.

Cylinder 42 is supported by the support mechanism in casing 41. In the example shown in Fig. 10, the support mechanism is formed of a support plate 49 fixed in casing 41 and a coil spring 48 mounted on support plate 49 to support cylinder 42.

A head cover 45 is fixed to one end of cylinder 42 with a plate 47 interposed therebetween. Compression space 44 for compressing a coolant is formed between head cover 45 and a head of piston 43.

An operation of a linear compressor having the structure above will now be described. Initially, when a coil of coil-wound body 8 is energized, thrust is produced between the coil and permanent magnet 31 of movable magnet portion 32. The thrust allows movable magnet portion 32 to move along an axial direction of cylinder 42. At that time, since movable magnet portion 32 is connected to piston 43, piston 43 also moves in the axial direction of cylinder 42, along with movable magnet portion 32.

The coolant is introduced from an inlet pipe not shown into casing 41, passes through a passage in head cover 45 and plate 47, and flows into compression space 44, where the coolant is then compressed by piston 43 and discharged through an outlet pipe not shown to the outside.

As such, the embodiments of the present invention have been described. However, it should be understood that all the embodiments disclosed here are by way of illustration in all aspects and are not to be taken by way of limitation. The scope of the present invention is intended to be limited only by the terms of the appended claims, and to embrace all the modifications made in the scope of the claims and the equivalent thereof.

### Industrial Applicability

The present invention can be applied to a linear motor device and a method of manufacturing the same, and a linear compressor and a Stirling engine both having the linear motor device.

## Claims

1. A linear motor device, comprising:
an inner yoke (30);
an outer yoke (4) located outside said inner yoke (30);
a coil-wound body (8) and a movable magnet portion (32) for driving a piston (43) reciprocating in a cylinder (42), both located between said inner yoke (30) and said outer yoke (4);
first and second clamping members (2, 3) for clamping said outer yoke (4); and
a spacer (5) for coupling said first and second clamping members (2, 3) at a given spacing,
said first clamping member (2) being provided with a support portion (16) supporting a spring (46) for pushing said piston (43), and
said second clamping member (3) being fixed directly or indirectly to said cylinder (42).

2. The linear motor device according to claim 1, wherein
said spacer (5) has axial end faces and smaller-diameter portions (9a, 9b) protruding from said axial end faces at both ends, and
said first and second clamping members (2, 3) have first and second receiving portions (6a, 6b) having concave portions (10a-10d) for receiving the smaller-diameter portions (9a, 9b) of said spacer (5) and support surfaces for supporting said axial end faces of said spacer (5).

3. The linear motor device according to claim 1, wherein
said outer yoke (4) is made of a plurality of outer yoke blocks (4a, 4b) arranged in a circumferential direction of said first and second clamping members (2, 3), the outer yoke blocks being separated in a longitudinal direction of said spacer (5), and
said outer yoke blocks (4a, 4b) are bonded to said first and second clamping members (2, 3) with welded portions interposed therebetween.

4. A method for manufacturing a linear motor device, comprising the steps of:
fixing a first outer yoke block (4a) and a second outer yoke block (4b) to a first clamping member (2) and a second clamping member (3), respectively, by ultrasonic welding;
while said first and second outer yoke blocks (4a, 4b) are fixed to said first and second clamping members (2, 3), coupling said first and second clamping members (2, 3) together by ultrasonic welding with a spacer (5) interposed therebetween,;
fixing said first and second outer yoke blocks (4a, 4b) to each other.

5. The method of manufacturing a linear motor device according to claim 4, wherein said first and second clamping members (2, 3) are coupled together with a gap provided between said first and second outer yoke blocks (4a, 4b).

6. A linear compressor comprising the linear motor device recited in claim 1.

7. A linear compressor, comprising:
a cylinder (42) provided in a casing (41);
a piston (43) reciprocating in said cylinder (42);
a linear motor device (1) provided in an outer periphery of said cylinder (42) to drive said piston (43); and
a spring (46) for pushing said piston (43),
said linear motor device (1) having an inner yoke (30), an outer yoke (4) located outside said inner yoke (30), a coil-wound body (8) and a movable magnet portion (32) located between said inner yoke (30) and said outer yoke (4), first and second clamping members (2, 3) for clamping said outer yoke (4), a spacer (5) for coupling said first and second clamping members (2, 3) at a given spacing, and a support portion (16) for supporting said spring (46),
said first clamping member (2) being provided with said support portion (16), and
said second clamping member (3) being mounted to said cylinder (42).

8. A Stirling engine, comprising:
a cylinder (22) provided in a casing (21);
a piston (23) and a displacer (24) reciprocating in said cylinder (22);
a linear motor device (1) provided in an outer periphery of said cylinder (22) for allowing said piston (23) to reciprocate in said cylinder (22); and
a spring (34) for pushing the displacer (24),
said linear motor device (1) having an inner yoke (30), an outer yoke (4) located outside said inner yoke (30), a coil-wound body (8) and a movable magnet portion (32) located between said inner yoke (30) and said outer yoke (4), first and second clamping members (2, 3) for clamping said outer yoke (4), a spacer (5) for coupling said first and second clamping members (2, 3) at a given spacing, and a support portion (16) for supporting said spring (34),
said first clamping member (2) being provided with said support portion (16), and
said second clamping member (3) being mounted to said cylinder (22).
